# EUROPEAN PATENT SPECIFICATION

(11) **EP 3 647 354 B1**
(45) Date of publication and mention of the grant of the patent: **27.04.2022**
(21) Application number: 18823022.1
(22) Date of filing: 11.06.2018
(51) Int. Cl.: C08L 23/16, C08L 23/08, C08K 5/14, H01M 8/0284, H01M 8/10, C08L 23/20, H01M 8/00

(54) **RUBBER COMPOSITION AND SEALANT FOR FUEL CELL SEPARATOR**
KAUTSCHUKZUSAMMENSETZUNG UND DICHTMITTEL FÜR BRENNSTOFFZELLENSEPARATOR
COMPOSITION DE CAOUTCHOUC, ET MATÉRIAU DE SCELLEMENT POUR SÉPARATEUR DE PILE À COMBUSTIBLE

(30) Priority: 28.06.2017 JP 2017126491
(43) Date of publication of application: 06.05.2020
(73) Proprietor: NOK Corporation, Tokyo 105-8585 (JP)
(72) Inventor: SUZUKI, Akihiro, Fujisawa-shi Kanagawa 251-0042 (JP); KAWASAKI, Kuniyoshi, Fujisawa-shi Kanagawa 251-0042 (JP)
(74) Representative: Beckmann, Claus
(86) International application number: PCT/JP2018/022232
(87) International publication number: WO 2019/003884

(56) References cited:
- EP-A1- 2 701 224
- EP-A1- 2 833 453
- WO-A1-2012/070245
- WO-A1-2015/122415
- JP-A- S57 162 737
- JP-A- 2010 146 781
- JP-A- 2012 226 907
- JP-A- 2016 036 023
- JP-A- 2017 183 162
- JP-A- 2017 188 417
- US-A1- 2013 233 376

## Description

### TECHNICAL FIELD

The present invention relates to a rubber composition and a sealing material for fuel cell separators. More particularly, the present invention relates to a rubber composition and a sealing material for fuel cell separators, which can satisfy low temperature sealing properties.

### BACKGROUND ART

Fuel cells have excellent characteristics, such as almost no need to use fossil fuels, for which exhaustion of resources has to be taken into consideration, almost no noise during power generation, and higher energy recovery rate than other energy power generation mechanisms. Accordingly, their parctical use has started.

In particular, polymer electrolyte fuel cells (PEFCs) are operated at a lower temperature compared with other types of fuel cells; thus, regarding the parts constituting the cells, there is no concern for corrosion in terms of materials. In addition, PEFCs can discharge relatively higher current, although they are operated at a low temperature. PEFCs have attracted attentions, not only for home cogeneration, but also as alternative power sources for internal combustion engines mounted in vehicles.

Of the parts constituting PEFCs, a separator generally has a plurality of parallel grooves formed on both sides or one side of a flat plate, and plays the role to transmit electricity generated in the gas diffusion electrode in the fuel cell to the outside, to drain water generated in the process of power generation to the grooves, and to secure the grooves as the flow passage of the reactant gas flowing into the fuel cell.

Separators for fuel cells having grooves that play such a role are required to be downsized. Further, since many separators are stacked for use, there is a demand for sealing materials for separators that have excellent durability and that can be used for a long period of time.

Moreover, the electrolyte membrane of PEFCs is made of a polymer membrane, such as a polytetrafluororesin membrane having a perfluorosulfonic side chain group. When crosslinking is performed while the sealing material is arranged in the vicinity of the electrolyte membrane, it is necessary to be careful so that the electrolyte membrane is not degraded by being heated during crosslinking. That is, as the sealing material for fuel cells, those that can be crosslinked at a lower temperature and for a shorter period of time are preferable.

As such sealing materials for separators, for example, those using EPDM have been proposed.

Patent Document 1 discloses, as an adhesive sealing material for fuel cells crosslinkable at a low temperature and having high sealing properties and adhesion reliability, one comprising a crosslinked product of a rubber composition comprising (A) EPDM, (B) an organic peroxide crosslinking agent having a one-hour half-life temperature of 130°C or less, (C) a crosslinking aid, and (D) an adhesive component that is a resorcinol-based compound - a melamine-based compound, or a silane coupling agent. Comparative Example 4 indicates that when the adhesion component (D) is not contained, inferior results are obtained in a 90° peel test and a T type peel test (initial stage, 100 hours and 1000 hours after dipping in 90°C warm water).

Further, Patent Document 2 indicates that the rubber composition disclosed in Patent Document 1 is further compounded with 5 to 30 parts by weight of ethylene-α-olefin copolymer based on 100 parts by weight of EPDM. Examples of α-olefins include α-olefins having 3 to 10 carbon atoms, such as propylene, butene-1, pentene-1, hexene-1, 4-methylpentene-1, heptene-1, octene-1, nonene-1, and decene-1. An aluminate-based coupling agent is also described as the above component (D).

According to the description of the Example using an ethylene-octene-1 copolymer, whose α-olefin is octene-1, tensile strength, elongation at break, 90° peel strength, and volume resistivity (insulation) are high, and the compounding effect of the ethylene-α-olefin copolymer is emphasized.

However, as one of the problems of fuel cell vehicles, design and control are required so as to avoid situations in which the vehicles cannot be operated due to freezing of FC stacks and system components in any of the following cases: at the time of start under low temperature conditions, during running under low temperature conditions, and at the time of being left at a temperature below the freezing point after running. Sealing materials are also required to have cold resistance; however, the cold resistance of EPDM is not considered to be sufficient.

In order to improve the low temperature properties of EPDM, means to improvement in terms of formulation by adding a plasticizer, such as oil, thus keeping a rubber-like state even at a low temperature is well known. However, in such a case, other problems, such as reduced rubber strength, reduced rubber elasticity, kneading properties, dispersibility, and bleed resistance have been newly found. For this type of use, it is also important to serve as a sealing material for separators. It has to be said that when EPDM is used, it is difficult to improve low temperature sealing properties while maintaining required functions.

### PRIOR ART DOCUMENTS

### PATENT DOCUMENTS

Patent Document 1 : JP-A-2009-94056
Patent Document 2 : JP-A-2011-249283
Patent Document 3 : JP-A-2011-213822

### OUTLINE OF THE INVENTION

### PROBLEM TO BE SOLVED BY THE INVENTION

An object of the present invention is to provide a rubber composition that can yield a sealing material for fuel cell separators, the sealing material having functions required as a sealing material for separators, and having improved low temperature sealing properties.

### MEANS FOR SOLVING THE PROBLEM

The above object of the present invention can be achieved by a rubber composition comprising 1 to 10 parts by weight of an organic peroxide crosslinking agent having a one-hour half-life temperature of 110 to 130°C, based on 100 parts by weight of an ethylene-butene-non-conjugated diene copolymer. The ethylene-butene-non-conjugated diene copolymer (EBT copolymer) can be used by being blended with EPDM in an amount of 50 wt% or less, preferably 30 wt% or less in the total amount of the EBT copolymer and EPDM. A crosslinked molded article of this rubber composition forms a sealing material for fuel cell separators.

### EFFECT OF THE INVENTION

The sealing material for fuel cell separators comprising a crosslinked molded article of the rubber composition according to the present invention uses an EBT copolymer, thereby providing a sealing material for separators having cold resistance superior to EPDM. The cold resistance is evaluated by the TRIO value and TR70 value of the low-temperature elasticity recovery test according to JIS K-6261 corresponding to ISO 2921.

Since the sealing material for separators exhibits excellent cold resistance without using various plasticizers, various problems caused by the use of plasticizers can be solved. Moreover, the sealing material for separators does not contain a resorcinol-based compound-melamine-based compound, an aluminate-based coupling agent, or a silane coupling agent.

Further, the Mooney viscosity of the rubber composition according to JIS K-6300 corresponding to ISO 289-1 is lower than that of a rubber composition using EPDM; thus, for example, production efficiency can be greatly improved for injection molding etc., thereby making it possible to largely reduce the production cost.

In addition, the flexibility of the sealing material for separators is superior to that of a sealing material using EPDM, as is reflected on the rubber hardness according to JIS K-6253-1 corresponding to ISO 18517; thus, in order to realize equivalent hardness, a low-cost reinforcing agent can be compounded, thereby largely reducing the material cost.

### EMBODIMENTS FOR CARRYING OUT THE INVENTION

The ethylene-butene-non-conjugated diene copolymer (EBT copolymer) used in the present invention is described in Patent Document 3. Butene-1 is mainly used as the butene. As the non-conjugated diene, cyclic or chain non-conjugated dienes, such as 5-ethylidene-2-norbornene, dicyclopentadiene, 5-vinyl-2-norbornene, and 1,4-hexadiene, are used; cyclic non-conjugated dienes are preferably used.

The EBT copolymer has a copolymerization composition comprising 50 to 95 mol%, preferably 70 to 95 mol%, of a structural unit derived from ethylene, 4.9 to 49.9 mol%, preferably 4.9 to 29.9 mol%, of a structural unit derived from butene, and 0.1 to 5 mol%, preferably 0.1 to 3 mol%, of a structural unit derived from non-conjugated diene, and is synthesized using a metallocene-based compound, such as (tert-butylamido)dimethyl(η⁵-2-methyl-s-indacen-1-yl)silanetitanium (II) 1,3-pentadine, as a polymerization catalyst.

Although the EBT copolymer can be used alone, 50 parts by weight or less, preferably 30 parts by weight or less, in 100 parts by weight of the EBT copolymer can be replaced by EPDM. That is, EBT copolymer is blended with EPDM in an amount of 50 wt% less in the total amount of the EBT copolymer and EPDM. If EPDM is used for replacement at a ratio greater than the above range, TR70, which serves as an index of cold resistance, is deteriorated, as shown in the results of Comparative Examples 1 and 2, provided later.

Patent Document 3 states that vulcanization of the EBT copolymer is performed using a sulfur-based compound, an organic peroxide, a phenol resin, an oxy compound, etc.

It is described that dicumyl peroxide, 2,5-dimethyl-2,5-di(tert-butylperoxy)hexane, 2,5-dimethyl-2,5-di(tert-butylperoxy)hexyne-3, 2,5-dimethyl-2,5-di(benzoylperoxy)hexane, di-tert-butyl peroxide, di-tert-butylperoxy-3,3,5-trimethylcyclohexane, tert-butyl hydroperoxide, and the like are used as the organic peroxide. In the Examples of Patent Document 3, sulfur and dicumyl peroxide are used as vulcanizing agents.

In the present invention, an organic peroxide having a one-hour half-life temperature of 110 to 130°C is used for the crosslinking of the EBT copolymer. If an organic peroxide having a one-hour half-life temperature of higher than this range (e.g., dicumyl peroxide) is used, the value of the vulcanization degree T90 increases, as shown in the results of Comparative Example 3, provided later. In contrast, if an organic peroxide having a one-hour half-life temperature of less than 110°C is used, the organic peroxide is likely to be decomposed due to heat generation during kneading, which eventually causes scorch. The term "one-hour half-life temperature" used herein refers to, in a half-life temperature that is an indicator indicating the decomposition temperature of the organic peroxide, a temperature, in which the half-life becomes 1 hour. The lower the one-hour half-life temperature is the easier, the organic peroxide is decomposed at a lower temperature.

As the above organic peroxide having the one-hour half-life temperature, peroxyketal or peroxyester, preferably peroxyketal, which has a one-hour half-life temperature of 110 to 130°C, is used.

Examples of the peroxyketal include n-butyl-4,4-di(t-butylperoxy)valerate, 2,2-di(t-butylperoxy)butane, 2,2-di[4,4-(t-butylperoxy)cyclohexyl]propane, 1,1-di(t-butylperoxy)cyclohexane, di(3,5,5-trimethylhexanoyl)peroxide, 1,1-di(t-hexylperoxy)cyclohexane, 1,1-di(t-hexylperoxy)-3,3,5-trimethyl cyclohexane, 1,1-di(t-butylperoxy)-2-methyl cyclohexane, and the like.

Moreover, examples of the peroxyester include tert-butylperoxybenzoate, tert-butylperoxyacetate, tert-hexylperoxybenzoate, tert-butylperoxy-2-ethylhexyl monocarbonate, tert-butylperoxylaurate, tert-butylperoxyisopropylmonocarbonate, tert-butylperoxy-3,5,5-trimethylhexanoate, tert-butylperoxy maleic acid, tert-hexylperoxyisopropylmonocarbonate, and the like.

These organic peroxide are used at a ratio of 1 to 10 parts by weight, preferably 2 to 5parts by weight, based on 100 parts by weight of the EBT copolymer or EBT copolymer-EPDM blend.

Other than the organic peroxide, carbon black (e.g., MT carbon black) or a silica reinforcing agent, a crosslinking aid, such as a maleimide compound, triallyl (iso)cyanurate, or trimethylolpropane trimethacrylate, can also be compounded and used. Further, hardness modifiers (e.g., silica, clay, and talc), processing aids (e.g., process oil), antioxidants, and the like can also be compounded and used, if necessary.

A rubber composition obtained by compounding an EBT copolymer or an EBT copolymer-EPDM blend with an organic peroxide using an open roll or the like is disposed between structural members to be bonded and sealed, and crosslinked. Crosslinking is preferably performed at about 120 to 200°C for about 0.5 to 30 minutes. If necessary, oven vulcanization (secondary vulcanization) is performed at about 150 to 250°C for about 0.5 to 24 hours.

Patent Document 3 indicates that EBT copolymer is used as various sealing materials etc.; however, the organic peroxide crosslinking agent used therein is nowhere specified. Further, no disclosure is made to sealing materials for fuel cell separators, for which cold resistance is required.

### EXAMPLES

The following describes the present invention with reference to Examples.

### Example 1

| | |
|---|---|
| EBT copolymer (EBT K-9330, produced by Mitsui Chemicals, Inc.) | 100 parts by weight |
| Peroxyketal (Perhexa C, produced by NOF Corporation; purity: 70%, 1,1-di(tert-butylperoxy)cyclohexane, one-hour half-life temperature: 111°C) | 4 parts by weight |
| MT carbon black (THERMAX N990, produced by Cancarb) | 60 parts by weight |

The above components were kneaded using an open roll, a Banbury mixer, a kneader, etc., and the kneaded product was vulcanized at 180°C for 10 minutes, followed by oven vulcanization (secondary vulcanization) at 150°C for 24 hours.

The obtained kneaded products and vulcanizates were evaluated or measured for characteristics described in the following items.

Kneading properties: When roll winding properties during kneading were good, this case was evaluated as **⊚;** and when there was no problem in kneading, although slight sticking was observed, this case was evaluated as O.

Vulcanization degree T90: The time (T90) until torque corresponding to 90% of the maximum torque was achieved, was revealed from the vulcanization curve of each rubber kneaded product under 180°C temperature conditions. When T90 was 60 seconds or less, this case was evaluated as O, and when T90 was greater than 60 seconds, this case was evaluated as ×.

Elongation at break: according to JIS K-6251 corresponding to ISO 37
The evaluation was as follows: 300% or more: O, and less than 300%: ×.

Low-temperature elasticity recovery test: according to JIS K-6261
(TR10 value) ⊚: -55°C or less, O: -50°C or less, ×: higher than -50°C
(TR70 value) ⊚: -40°C or less, O: -35°C or less, ×: higher than -35°C

### Example 2

In Example 1, the same amount (4 parts by weight) of another peroxyketal (Perbutyl 355, produced by NOF Corporation; purity: 97% or more, di(3,5,5-trimethylhexanoyl)peroxide, one-hour half-life temperature: 119°C) was used in place of the peroxyketal used in Example 1.

### Example 3

In Example 2, the amount of the EBT copolymer was changed to 90 parts by weight, and 10 parts by weight of EPDM (JSR EP27, produced by JSR) was used.

### Example 4

In Example 2, the amount of the EBT copolymer was changed to 70 parts by weight, and 30 parts by weight of EPDM (JSR EP27) was used.

### Example 5

In Example 2, the amount of the EBT copolymer was changed to 50 parts by weight, and 50 parts by weight of EPDM (JSR EP27) was used.

### Comparative Example 1

In Example 2, the amount of the EBT copolymer was changed to 30 parts by weight, and 70 parts by weight of EPDM (JSR EP27) was used.

### Comparative Example 2

In Example 2, the amount of the EBT copolymer was changed to 10 parts by weight, and 90 parts by weight of EPDM (JSR EP27) was used.

### Comparative Example 3

In Example 1, 2 parts by weight of dialkyl peroxide (Percumyl D, produced by NOF Corporation; purity: 98 % or more, dicumyl peroxide, one-hour half-life temperature: 136°C) was used in place of peroxyketal.

Table 1 below shows the results obtained.

**Table 1**

| Evaluation - measurement item | | Ex. 1 | Ex. 2 | Ex. 3 | Ex. 4 | Ex. 5 | Comp. Ex. 1 | Comp. Ex. 2 | Comp. Ex. 3 |
|---|---|---|---|---|---|---|---|---|---|
| Kneading properties | | ○ | ○ | ○ | ⊚ | ⊚ | ⊚ | ⊚ | ○ |
| T90 (sec) | | 50 | 50 | 50 | 50 | 50 | 50 | 50 | 280 |
| | Evaluation | ○ | ○ | ○ | ○ | ○ | ○ | ○ | × |
| Elongation (%) | | 330 | 310 | 330 | 350 | 310 | 320 | 320 | 320 |
| | Evaluation | ○ | ○ | ○ | ○ | ○ | ○ | ○ | ○ |
| TRIO value (°C) | | -58 | -58 | -58 | -57 | -56 | -53 | -50 | -58 |
| | Evaluation | ⊚ | ⊚ | ⊚ | ⊚ | ⊚ | ○ | ○ | ⊚ |
| TR70 value (°C) | | -40 | -42 | -40 | -39 | -37 | -34 | -30 | -43 |
| | Evaluation | ⊚ | ⊚ | ⊚ | ○ | ○ | × | × | ⊚ |

### Comparative Example 4

In Example 2, the same amount (100 parts by weight) of EPDM (JSR EP27, produced by JSR) was used in place of EBT copolymer.

### Comparative Example 5

In Comparative Example 4, the amount of peroxyketal was changed to 5 parts by weight, and 20 parts by weight of adipic acid ester (DIDA, produced by Showa Kosan Co., Ltd.) was further used.

### Comparative Example 6

In Comparative Example 5, 1 part by weight of maleimide compound crosslinking aid (VULNOC PM, produced by Ouchi Shinko Chemical Industrial Co., Ltd.) was further added.

| Comparative Example 7 | | |
|---|---|---|
| | EPDM (EP27) | 100 parts by weight |
| | Peroxyketal (Perhexa C) | 2 parts by weight |
| | Crosslinking aid (VULNOC PM) | 1 part by weight |
| | MAF carbon black (Shoblack IP200 produced by | 40 parts by weight |
| | Cabot Japan K.K. | |
| | Process oil (PW-380) | 40 parts by weight |

Using the above components, kneading, vulcanization, and evaluation or measurement of various properties were performed in the same manner as in Example 1.

| Comparative Example 8 | | |
|---|---|---|
| | EPDM (EP51) | 100 parts by weight |
| | peroxyester (Perbutyl 355) | 2 parts by weight |
| | Crosslinking aid (VULNOC PM) | 1 part by weight |
| | MAF carbon black (Shoblack IP200) | 30 parts by weight |
| | Process oil (PW-380) | 40 parts by weight |

Using the above components, kneading, vulcanization, and evaluation or measurement of various properties were performed in the same manner as in Example 1.

Table 2 below shows the results obtained in Comparative Examples 4 to 8. When a plasticizer with good low temperature characteristics was added to EPDM, a crosslinking aid was added to improve the TR70 value, and crosslinking density was increased, the elongation was not good, as shown in the results of Comparative Example 6.

**Table 2**

| Evaluation - measurement item | | Comp. Ex. 4 | Comp. Ex. 5 | Comp. Ex. 6 | Comp. Ex. 7 | Comp. Ex. 8 |
|---|---|---|---|---|---|---|
| Kneading properties | | ⊚ | ⊚ | ⊚ | ⊚ | ⊚ |
| T90 (sec) | | 50 | 50 | 50 | 50 | 48 |
| | Evaluation | ○ | ○ | ○ | ○ | ○ |
| Elongation (%) | | 330 | 450 | 230 | 410 | 450 |
| | Evaluation | ○ | ○ | × | ○ | ○ |
| TRIO value (°C) | | -48 | -55 | -56 | -47 | -28 |
| | Evaluation | × | ⊚ | ⊚ | × | × |
| TR70 value (°C) | | -26 | -29 | -31 | -30 | +5 |
| | Evaluation | × | × | × | × | × |

## Claims

1. A rubber composition comprising 1 to 10 parts by weight of an organic peroxide crosslinking agent having a one-hour half-life temperature of 110 to 130°C, based on 100 parts by weight of an ethylene-butene-non-conjugated diene copolymer, and neither resorcinol-based compound-melamine-based compound, aluminate-based coupling agent, nor silane coupling agent.

2. The rubber composition according to claim 1, wherein the ethylene-butene-non-conjugated diene copolymer is blended with EPDM in an amount of 50 wt% or less in the total amount of the ethylene-butene-non-conjugated diene copolymer and EPDM.

3. The rubber composition according to claim 1 or 2. wherein the organic peroxide having a one-hour half-life temperature of 110 to 130°C is a peroxyketal-based or peroxyester-based organic peroxide.

4. The rubber composition according to claim 1 or 2, which contains no plasticizer.

5. The rubber composition according to claim 1 or 2, which is used for crosslinking molding of a sealing material for fuel cell separators.

6. A sealing material for fuel cell separators comprising a crosslinked molded article of the rubber composition according to claim 5.

## Patentansprüche

1. Kautschukzusammensetzung, umfassend 1 bis 10 Gewichtsteile eines organischen Peroxid-Vernetzungsmittels mit einer einstündigen Halbwertszeittemperatur von 110 bis 130°C, bezogen auf 100 Gewichtsteile eines Ethylen-Buten-nicht-konjugierten Dien-Copolymers, und weder Resorcinbasierte-Verbindung-Melaminbasierte-Verbindung, aluminatbasiertes Kupplungsmittel noch Silankupplungsmittel.

2. Kautschukzusammensetzung nach Anspruch 1, wobei das Ethylen-Buten-nicht-konjugierte Dien-Copolymer mit EPDM in einer Menge von 50 Gew.-% oder weniger der Gesamtmenge des Ethylen-Buten-nicht-konjugierten Dien-Copolymers und EPDM gemischt ist.

3. Kautschukzusammensetzung nach Anspruch 1 oder 2, wobei das organische Peroxid mit einer einstündigen Halbwertszeit von 110 bis 130 °C ein organisches Peroxid auf Peroxyketal- oder Peroxyesterbasis ist.

4. Kautschukzusammensetzung nach Anspruch 1 oder 2, die keinen Weichmacher enthält.

5. Kautschukzusammensetzung nach Anspruch 1 oder 2 , die zum vernetzenden Formen eines Dichtungsmaterials für Brennstoffzellen-Separatoren verwendet wird.

6. Dichtungsmaterial für Brennstoffzellen-Separatoren, umfassend einen vernetzten Formkörper aus der Kautschukzusammensetzung nach Anspruch 5.

## Revendications

1. Composition de caoutchouc comprenant 1 à 10 parties en poids d'un agent de réticulation de type peroxyde organique ayant une température de demi-vie d'une heure de 110 à 130 °C, par rapport à 100 parties en poids d'un copolymère éthylène-butène-diène non conjugué, et ni composé à base de résorcinol-composé à base de mélamine, ni agent de couplage à base d'aluminate, ni agent de couplage de type silane.

2. Composition de caoutchouc selon la revendication 1, dans laquelle le copolymère éthylène-butène-diène non conjugué est mélangé avec l'EPDM en une quantité de 50 % en poids ou moins par rapport à la quantité totale du copolymère éthylène-butène-diène non conjugué et de l'EPDM.

3. Composition de caoutchouc selon la revendication 1 ou 2, dans laquelle le peroxyde organique ayant une température de demi-vie d'une heure de 110 à 130 °C est un peroxyde organique à base de peroxycétal ou de peroxyester.

4. Composition de caoutchouc selon la revendication 1 ou 2, qui ne contient pas de plastifiant.

5. Composition de caoutchouc selon la revendication 1 ou 2, qui est utilisée pour le moulage par réticulation d'un matériau d'étanchéité pour les séparateurs de piles à combustible.

6. Matériau d'étanchéité pour séparateurs de piles à combustible comprenant un article moulé réticulé de la composition de caoutchouc selon la revendication 5.
